# EUROPEAN PATENT SPECIFICATION

(11) **EP 2 523 818 B1**
(45) Date of publication and mention of the grant of the patent: **30.10.2013**
(21) Application number: 11705220.9
(22) Date of filing: 14.01.2011
(51) Int. Cl.: B60K 15/04

(54) **ANTI SIPHON DEVICE**
ABSAUGSCHUTZVORRICHTUNG
DISPOSITIF ANTISIPHON

(30) Priority: 14.01.2010 GB 201000603
(43) Date of publication of application: 21.11.2012
(73) Proprietor: Tiss Limited, Blackpool Lancashire FY4 1DW (GB)
(72) Inventor: FOSTER, Richard, Blackpool FY4 1DW (GB); WHOLEY, Ryan, Blackpool FY4 1DW (GB)
(74) Representative: Stevenson-Hill, Jack Patrick
(86) International application number: PCT/GB2011/000044
(87) International publication number: WO 2011/086356

(56) References cited:
- WO-A1-2006/048659
- WO-A1-2007/110640
- WO-A1-2009/127812
- GB-A- 2 117 492
- US-A- 3 951 297

## Description

The present invention relates to an anti siphon device suitable for use in conjunction with a fluid tank such as a vehicle fuel tank.

The theft of fuel by siphoning from the fuel tanks of vehicles, and in particular commercial road vehicles, is a recognised problem. It is known to fit vehicles with a lockable fuel tank filler cap to prevent unauthorised access to the tank inlet. However, since the fuel filler cap is accessible it is vulnerable to tampering and can often be forced open by the determined thief. In addition, it is not always practical to fit a vehicle with a lockable fuel filler cap.

This problem has been addressed in the prior art by provision of a fluid tank inlet incorporating structure to prevent insertion of a siphon tube into the tank. For example, WO2006/048659 discloses an anti-siphon fluid tank inlet assembly comprising a tubular inlet body which in use is secured to the normal tank inlet so that its distal end extends a short distance in to the tank. The tubular inlet body is designed to receive a conventional fuel dispensing nozzle. A conically shaped baffle is provided at the distal end of the tubular inlet body to prevent insertion of a siphon tube through the tubular inlet body and into the tank below. Both the tubular inlet body and the conical baffle are provided with apertures sized to allow the egress of fuel but block insertion of a siphon tube of any practical diameter. The inlet is designed so that fuel hitting the conical baffle either passes through the apertures in the baffle or is deflected towards apertures in the tubular inlet body.

With such anti-siphon inlets, fuel can only be siphoned to the extent that the fuel level is above the base of the conical baffle. It is therefore desirable for the tubular inlet body to be as short as possible. However, the shorter the tubular inlet body the more prone the inlet becomes to the problem of "backflow". That is, if fuel does not flow through the inlet at a minimum rate, fuel can well up within the inlet and either spit out of the inlet or cause sufficient back-pressure to activate the filler nozzle automatic shut-off mechanism thereby interrupting fuel delivery.

It is thought that the "backflow" may be caused, at least in part, by at least one of the following effects. First, the configuration of the baffle and the tubular inlet body (in particular the apertures through which the fuel passes) may be such that as the fuel hits the baffle or tubular inlet body and passes through the apertures a turbulent flow regime within the fuel is created. Due to the chaotic nature of a turbulent flow regime, fuel in this state is less likely to pass directly through the apertures and into the tank. Secondly, as the tank is filled with fuel, the fuel will displace air that is within the tank. The displaced air will attempt to flow out of the tank via the apertures in the inlet assembly. It follows that the apertures will not only have fuel flowing through them towards the tank, but air flowing through them away from the tank. Depending on the circumstances, the flow of the air away from the tank may be sufficient to impede the passage of fuel through the apertures resulting in "backflow". In other circumstances, the flow of the fuel through the apertures may impede the flow of air out of the tank and therefore create a "back pressure" within the tank which resists the in-flow of fuel. In still further circumstances, the fuel may pass through the apertures in such a way that after the fuel has flowed though the apertures it forms an obstruction to the flow of air towards the apertures. For example, the fuel may form a mist or 'wall' which impedes the flow of air through it to the apertures in the inlet assembly and thence to atmosphere to the exterior of the tank.

An anti siphon device according to the preamble of claim 1 is known from WO 2009/127812.

It is an object of the present invention to obviate or mitigate at least one of the above problems.

According to the present invention there is provided an anti siphon device, comprising:
a generally tubular body having a longitudinal axis X; an outlet; an inlet; the inlet having an opening adapted to receive a fuel dispensing nozzle the end of which has an outside diameter D, the inlet having a constriction spaced from said opening along said axis and having a diameter d less than D; an obstruction, at least a major portion of which is located between the constriction and the outlet, the obstruction tapering outwardly relative to the axis in a direction from the constriction to the outlet; and a flow passageway extending from the constriction to the outlet and defined between the obstruction and a wall surface at least substantially surrounding the obstruction, the flow passageway having a minimum width less than the diameter d of the constriction;
wherein at least a portion of the inlet is defined by a wall surface which tapers inwardly in the direction of said axis to said constriction and is adapted to support the end of the fuel dispensing nozzle.

The inventors have found that apertures provided in the baffle and tubular body of known inlet structures such as that described in WO2006/048659 referenced above may hinder fluid flow through the anti siphon device. This is believed to be the result of turbulence induced in the fuel by the presence of apertures and the turbulent flow of the fuel through the apertures. The shape of the obstruction of the present invention, in addition to the outlet being defined between the wall surface and the obstruction, allows the obstruction to direct fuel flow to the outlet and results in a less turbulent flow of fuel through the device. For a given length of tubular body, the invention improves fluid flow and increases the speed of fuel flow through the inlet that can be achieved without encountering problems due to "backflow" or "back pressure". Accordingly, the rate of fuel delivery can either be increased or the length of the tubular body can be reduced for a given fuel delivery rate. The latter feature is of particular benefit as by reducing the length of the tubular body the amount of fuel potentially exposed to theft by siphoning is reduced.

Because the constriction member is adapted to support the end of the fuel dispensing nozzle, the fuel dispensing nozzle may be maintained in a spaced relationship with the obstruction. For instance the end of the nozzle may be supported above the obstruction.

The maximum diameter of the portion of the inlet which is defined by the tapered wall surface is greater than diameter D.

A device according to the present invention may additionally comprise a generally annular splash guard member mounted within inlet and having an aperture axially aligned with the constriction and having a diameter adapted to receive the fuel dispensing nozzle of diameter D. The obstruction may comprise an apex which lies on said axis X and the aperture may extend along axis X. In this way a fuel dispensing nozzle which is supported by the tapered wall surface will be aligned with the apex of the obstruction. This allows fuel dispensed from the fuel dispensing nozzle to be distributed evenly in the flow passageway around the obstruction. The splash guard member may comprise at least one air flow hole. The air flow hole will allow air to pass from one side of the splash guard to the other and hence to exit the device to atmosphere.

The tapered wall surface may be defined by at least part of a first surface of revolution of a first line about a first revolution axis. A surface of revolution will be understood to be generated by rotating a line around an axis (the line may meet the axis at an apex of the surface). The first line may be a straight line so that the surface is conical (or frustro-conical), or may be curved. A convex curve will for instance generate a domed surface, whereas a concave curve will generate a horn shaped surface. The first revolution axis may be the axis X. A conical, frustro-conical, domed or horn-shaped tapered wall surface is thought to guide fuel away from the fuel dispensing nozzle to the obstruction. Efficient guiding of the fuel away from the fuel filler nozzle is thought to minimise "back pressure" experienced by the filler nozzle and hence reduces the occurrence of unintentional activation of the filler nozzle automatic shut-off mechanism.

The obstruction may comprise a surface at least part of which is defined by at least a part of a surface of revolution of a second line about a second revolution axis. The second revolution axis may be the axis X and/or the first revolution axis. The second line may be a straight line so that the surface is conical (or frustro-conical), or may be curved. A convex curve will for instance generate a domed surface, whereas a concave curve will generate a horn shaped surface. The obstruction may comprise an apex. Said apex may lie on axis X or the first revolution axis. Alternatively, the surface of the obstruction may be truncated, in that it may be flattened or blunted below an apex of the surface of revolution. In some embodiments of the invention the surface of the obstruction member may be defined by at least a part of a surface of revolution centred on an axis offset from and/or angled to the axis X. In yet other embodiments of the invention the inclined surface of the obstruction member need not be defined by at least a part of a surface of revolution, but preferably still rises to an apex (or to a flattened or blunted surface which lies below an imaginary apex) and most preferably to an apex (or imaginary apex) lying on the axis X. In embodiments of the invention where the apex of the obstruction (or the imaginary apex, or the apex of the surface of revolution) lies on the axis X and where the tapered wall surface may be defined by at least part of a surface of revolution of a line about the axis X, by aligning the fuel dispensing nozzle such that is directly over the apex of the obstruction, it is thought this reduces the turbulence of fluid flowing past the obstruction, thus allowing for greater fuel delivery rates.

The obstruction may comprises a surface, at least part of which is parallel to the axis X, the outlet being defined between said wall surface at least substantially surrounding the obstruction and said at least part of the surface of the obstruction. A portion of a surface of the obstruction which defines said at least one flow passageway may be free from apertures. An obstruction member having a smooth, aperture free frustro-conical or domed surface will allow fuel to flow past the obstruction without difficulty and reduce turbulence generated within the fuel whilst doing so. As mentioned above, this will result in a greater achievable fuel flow rate through the device. Ensuring that part of a surface of the obstruction member which defines the outlet is parallel to the axis of the device facilitates fuel exiting the device via the outlet such that it exits in a direction substantially parallel to the axis of the device. Fuel exiting the device in a direction substantially parallel to the axis of the device has the benefit that it is less likely to interfere with displaced air travelling out of the fuel tank via the device.

The cross sectional shape of the outlet perpendicular to the axis X may be annular or part annular.

The profile parallel to axis X of at least a part of said wall surface at least substantially surrounding the obstruction may correspond to the profile parallel to the axis X of at least a part of the obstruction. The corresponding profiles of at least part of said wall surface and at least part of the obstruction may result in a constant separation between the at least part of said wall surface and at least part of the obstruction. Such a constant separation may reduce turbulence in fuel as it passes between the obstruction and the at least a part of said wall surface at least substantially surrounding the obstruction.

The tubular body may comprise at least one breather hole. A breather hole may allow the passage of displaced air through the device without impeding the flow of fuel through the outlet. This may increase the maximum flow rate of fuel through the device. The at least one breather hole may be provided such that it opens at a first end to the exterior of the tubular body and at a second end to the tapered wall surface.

The obstruction may comprise an obstruction member and said wall surface at least substantially surrounding the obstruction may be defined by a wall portion, said obstruction member and said wall member being discrete. Said wall portion and said tubular body may be integral. Alternatively, the obstruction may be formed integrally with the wall portion, for instance by casting or machining. Similarly, the wall portion may be integral with the tubular body.

The obstruction member may comprise at least one first engagement portion and the wall portion may comprise at least one second engagement portion, the or each at least one first engagement portion and the or each at least one second engagement portion co-operating so as to mount the obstruction within the tubular inlet body. The or each at least one first engagement portion may comprise a radial projection with respect to the axis X. The radial projection may define at least part of the outlet. The or each at least one second engagement portion may be provided with a screw thread. The screw thread of the or each at least one second engagement portion may face axis X. The radial projection may comprise a screw thread which is complementary to the screw thread of the or each second engagement portion. The or each second engagement portion may comprise a shoulder which extends radially inward with respect to axis X. In some embodiments of the invention the device may additionally comprise a retaining member having a screw thread which is complementary to that of the or each second engagement portion, wherein the radial projection is secured between the shoulder and the retaining member and wherein the retaining member is secured to the or each second engagement portion by the co-operation of the screw thread of the retaining member and the screw thread of the or each second engagement portion.

The obstruction member may be hollow and may have a substantially uniform thickness. Alternatively the obstruction member may be a solid block.

Both the tubular inlet body and the baffle are preferably fabricated from metal or other strong material that resists puncture by anyone trying to circumvent the anti-siphon protection of the baffle.

It will be appreciated that the "apex" of the obstruction member may not be a point, but may be flattened or rounded.

The terms "dome" and "domed" are used herein to refer to a surface of revolution (truncated or otherwise) generated by a convex curved line, and covers any curve including for instance the arc of a circle, a parabola or any convex curve.

According to another aspect of the invention there is provided an anti siphon device comprising a tubular body, the tubular body having a first portion defining an inlet and a second portion defining an outlet; and an obstruction member located within the tubular body, wherein an outer diameter of the first portion of the tubular body is greater than an outer diameter of the second portion of the tubular body.

The outer diameter of the second portion of the tubular body may be less than an inner diameter of the first portion of the tubular body.

The outer diameter of the second portion of the tubular body may be less than an outer diameter of a fuel filler nozzle which is insertable into the inlet of the anti siphon device.

Other preferred features of the invention will become apparent from the description below.

Specific embodiments of the present invention will now be described, by way of example only, with reference to the accompanying drawings, in which:
Figure 1 is a side view of an embodiment of an anti-siphon device according to the present invention;
Figure 2 is a perspective view from one end of the embodiment of figure 1;
Figure 3 is a perspective view from the other end of the embodiment of figure 1;
Figure 4 is a schematic axial cross-section through part of the embodiment of figure 1;
Figure 5 is a side view of an obstruction member which forms part of the embodiment of figure 1;
Figure 6 is a view from below of the obstruction member shown in Figure 5;
Figure 7 is a schematic axial cross-section through the embodiment of figure 1 showing a fuel filler nozzle inserted into the device;
Figure 8 is a schematic cross-section through a fuel tank, the fuel tank having an inlet within which the embodiment of figure 1 is secured;
Figure 9 is a schematic axial cross-section of the same type as figure 4 showing alternative means of securing the obstruction member within the device;
Figure 10 is a schematic axial cross-section of the same type as figure 4 showing an alternative embodiment of an anti-siphon device according to the present invention;
Figure 11 a is a schematic view of a fuel tank inlet and a fuel filler nozzle;

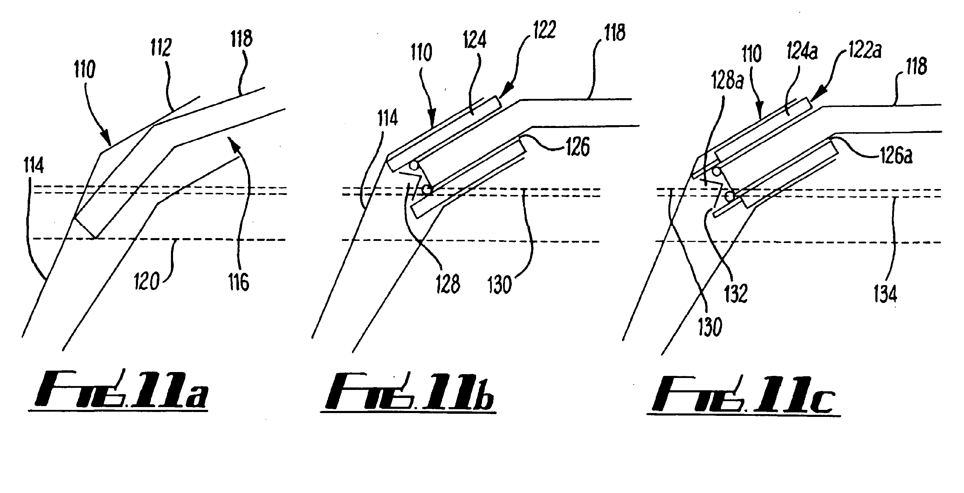

Figure 11 b is a schematic view of an anti siphon device mounted within the fuel tank inlet shown in figure 11 a; and
Figure 11 c is a schematic view of an anti siphon device according to a further aspect of the present invention mounted within the fuel tank inlet shown in figure 11a.

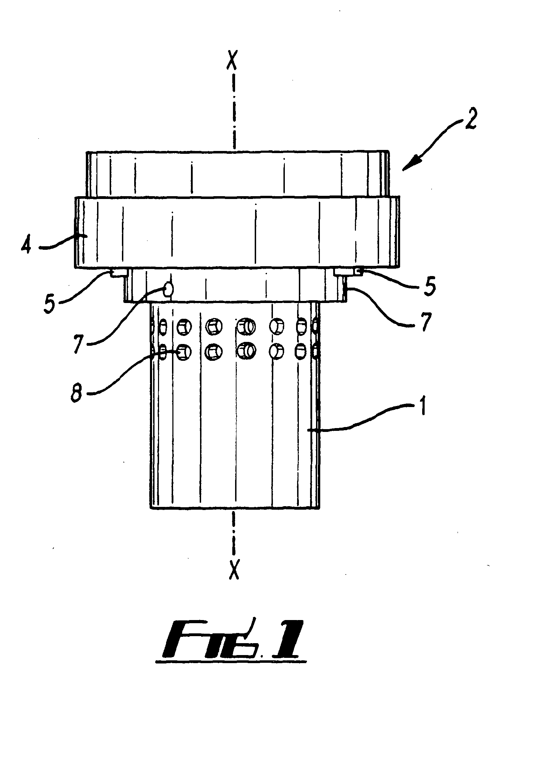

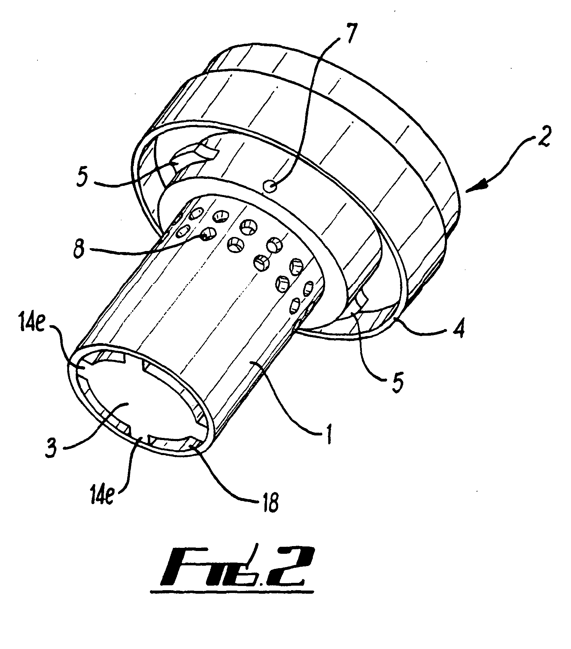

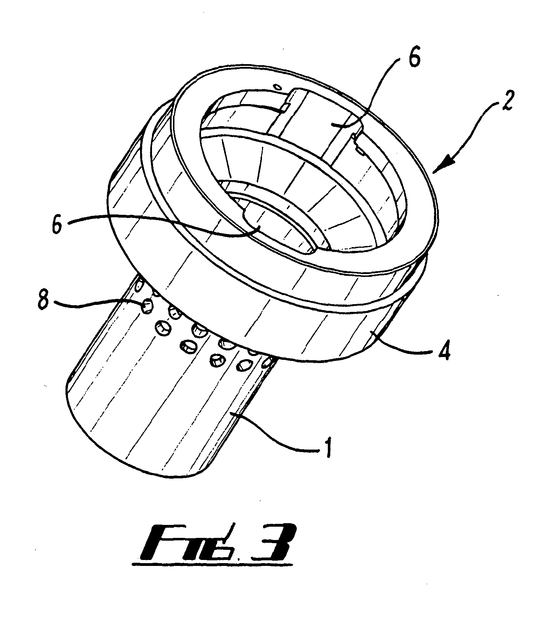

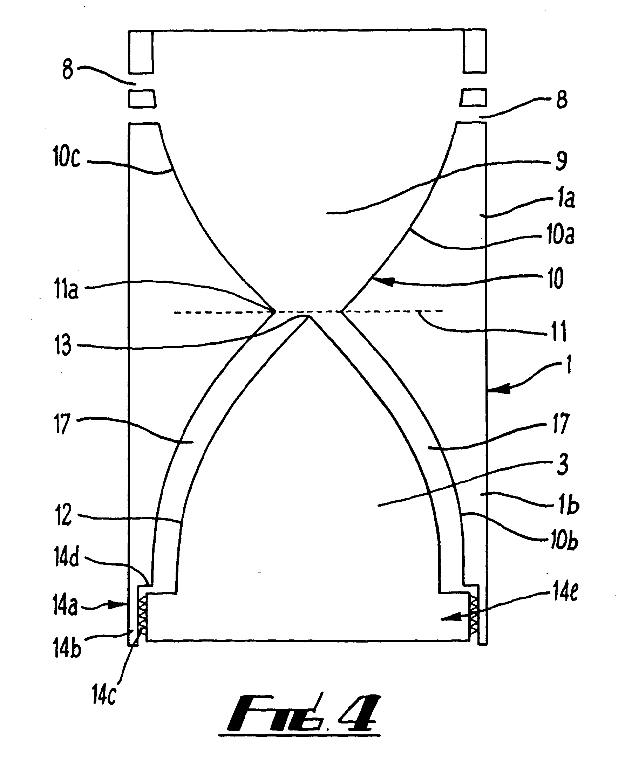

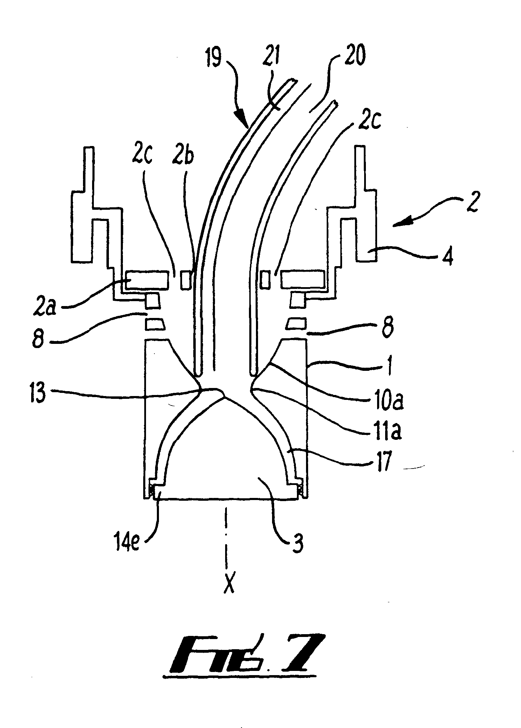

Referring first to figures 1 to 3, the illustrated anti-siphon device is designed for installation in the inlet of a vehicle fuel tank and comprises a tubular body 1 having an axis X and depending from an attachment means or mounting structure 2 at its proximal end. A fuel tank inlet commonly comprises a length of pipe which leads to the fuel tank. The anti-siphon device is received by the fuel-tank and/or the fuel tank inlet pipe. As shown in figure 2, the distal end of the tubular body 1 is partially occluded by a domed obstruction member 3 (shown most clearly in figures 4 to 6) whereas the proximal end of the tubular body 1 is comprises an inlet having an opening adapted to receive a conventional fuel dispensing nozzle (shown most clearly in figure 7).

The attachment means 2 comprises a collar 4 adapted to seat over the cylindrical neck of a conventional fuel tank inlet. Bayonet lugs 5 extend radially outward from a radially thickened annular portion 1 a of the tubular body 1 towards the collar 5. The bayonet lugs 5 are adapted for engaging conventional bayonet fittings provided on a fuel tank inlet to receive a conventional fuel filler cap. Internally, the mounting structure 2 is provided with recesses 6 to receive the bayonet lugs of a conventional filler cap. Accordingly, the anti-siphon inlet is designed to be fitted to the inlet neck of a conventional fuel-tank inlet, and closed with a conventional fuel-filler cap. If necessary, the collar 4 may be fixed to the inlet tank neck, for instance using a suitable adhesive. Additionally, or alternatively, the inlet may be secured in the inlet tank neck by grub screws extending outwardly from the tubular body through holes 7 and engage the internal surface of the inlet neck.

The tubular body 1 is provided with a plurality of breather holes 8 distributed around a proximal portion of the tubular body 1.

Referring now to figure 4, the tubular body 1 has a central bore 9 defined by a wall 10. The tubular body 1 may be thought of as comprising a proximal portion 1 a (above dashed line 11) having a proximal wall portion 10a; and a distal portion 1b (below dashed line 11) having a distal wall portion 10b.

The proximal wall portion 10a comprises a constant diameter portion near the opening of the tubular member and a tapered portion 10c which is tapered in the direction of axis X and leads to a constriction 11a. The proximal wall portion is defined by a surface of revolution of a convex curved line rotated about the axis X of the tubular body. Hence, the proximal wall portion 10a is rotationally symmetric. The proximal wall portion 10a defines a domed surface which generally decreases in diameter (perpendicular to the axis X) moving towards the constriction 11a. The diameter of the proximal wall portion 10a decreases to a non-zero minimum at the constriction 11a. The minimum diameter of the constriction 11 a is defined in part by the size of the filler nozzle(s) which may be used with the device. This is discussed in greater detail below. Radial breather holes 8 pass from the exterior of the proximal portion 1a of the tubular body and open onto the proximal wall portion 10a of the tubular body 1.

The distal wall portion 10b also comprises a constant diameter portion at its distal end and a portion which is generally inclined relative to the axis X. The distal wall portion is defined by a surface of revolution of a convex curved line rotated about the axis X of the tubular body. Hence, the distal wall portion 10b is rotationally symmetric. The distal wall portion 10b defines a domed surface which generally increases in diameter (perpendicular to the axis X) moving away from the constriction 11a. The diameter of the distal wall portion 10b is a non-zero minimum at the constriction 11a.

The minimum diameter part of the distal wall portion 10b adjoins the minimum diameter part of the proximal wall portion 10a via the constriction 11 a such that the central bore 9 is continuous through the tubular body 1. In this case, the constriction 11a is a ring defined by the minimum diameter of the proximal wall portion 10a and the minimum diameter of the distal wall portion 10b , said minimum diameter of the proximal wall portion 10a and minimum diameter of the distal wall portion 10b being equal. However, the constriction may have a different structure, as long as its minimum diameter is less than the diameter of a fuel dispensing nozzle which may be inserted into the device. For example, the minimum diameter of the proximal wall portion may be different to the minimum diameter of the distal wall portion and the constriction may comprise a conduit which connects the distal wall portion at its minimum diameter with the proximal wall portion at its minimum diameter.

An obstruction is provided within the tubular body 1. The obstruction comprises a domed obstruction member 3 which is mounted within the portion of the bore 9 defined by the distal wall portion 10b. The domed surface 12 of the obstruction member 3 is defined by surface of revolution of a convex curved line rotated about the axis X of the tubular body. Hence, the domed surface 12 of the obstruction member 3 is rotationally symmetric. The domed surface 12 increases in diameter (perpendicular to the axis X) from an apex 13 which lies on the axis X at its proximal end towards the distal end of the obstruction member 3. The profile of the domed surface 12 is such that at its distal end the surface 12 has a constant diameter and hence extends in a direction substantially parallel to the axis X.

The distal end of the tubular member 1 comprises an engagement portion 14a adjacent the distal wall portion 10b. The engagement portion 14a comprises a tubular portion 14b, again centred on axis X, the internal diameter of which is greater than the greatest internal diameter of the distal wall portion 10b. The engagement portion 14a comprises a screw thread 14c on its internal face. The engagement portion 14a further comprises a radially extending annular shoulder 14d which extends between the distal wall portion 10b and the tubular portion 14b.

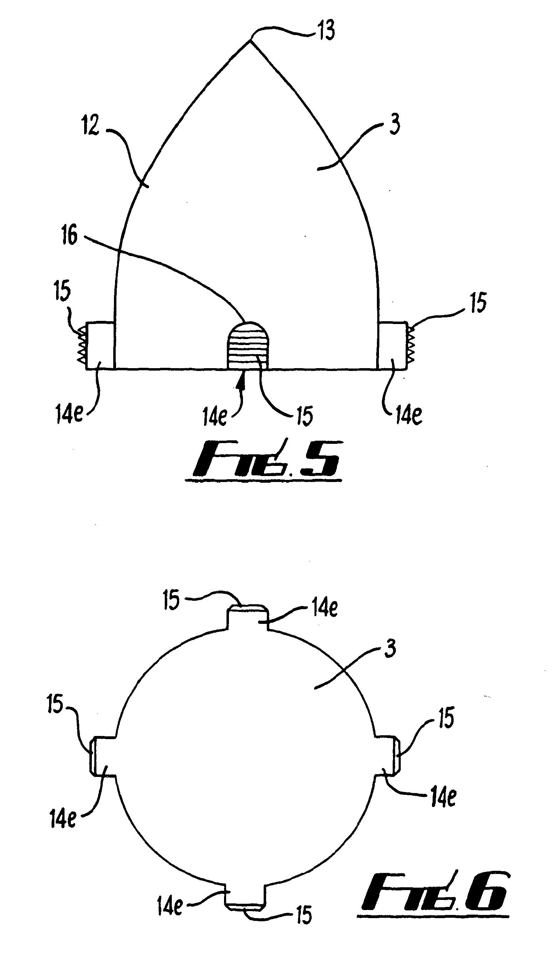

Referring now to figures 5 and 6, the obstruction member 3 is a solid block and its distal end comprises four similar engagement portions 14e which project radially outward from the obstruction member 3 relative to axis X. The engagement portions 14e are angularly spaced (relative to axis X) equally around the obstruction member 3. The radially outermost part of each engagement portion 14e has a similar screw thread 15. As shown in figure 5, each engagement portion 14e comprises a curved upper surface 16 which faces in the general direction of the apex of the obstruction member 3.

As shown in figure 4, the screw threads 15 of the engagement portions 14e of the obstruction member 3 correspond to the screw thread 14c of the engagement portion 14a of the tubular member 1. In this way, the obstruction member 3 may be rotated relative to the tubular member 1 about axis X which enables the screw threads 15 to co-operate with the single continuous screw thread 14c so as to mount the obstruction member 3 within the tubular member 1. The shoulder 14d acts as a stop which helps to locate the obstruction member 3 at the correct axial position within the tubular member 1. As the obstruction member 3 and tubular member 1 are screwed together, the engagement portions 14e of the obstruction member 3 abut the shoulder 14d preventing the obstruction member 3 from being screwed any further into the tubular member 1.

Once located within the tubular body 1, the domed surface 12 of the obstruction member 3 and the distal wall portion 10b define a flow passageway 17 which connects the constriction 11a (and hence the portion of the central bore 9 within the proximal part 1a of the tubular body 1) to an outlet 18 at the distal end of the anti siphon device. The outlet 18 (as seen best in figure 2) is defined between the distal wall portion 10b of the tubular body 1 and the obstruction member 3 and is hence generally annular in shape. The outlet 18 comprises four similar segments of an annulus, the segments being defined by the engagement portions 14e. The portion of the wall of the tubular body 1 and the portion of the surface of the obstruction member 3 which define the outlet 18 are both substantially parallel to the axis X.

Referring now to figure 7, in use, a conventional fuel dispensing nozzle 19 is inserted into the open (proximal) end of the tubular body 1. The fuel dispensing nozzle 19 comprises a main conduit 20 through which fuel may flow and a second, smaller 'breather' conduit 21. The 'breather' conduit 21 is used as part of a cut-off sensor (not shown). The cut off sensor operates to cease the flow of fuel to the nozzle should the 'breather' conduit 21 become obstructed by fuel. This condition usually occurs when the fuel tank is full such that the fuel level rises into the fuel tank inlet and hence into the inserted fuel nozzle 19.

The proximal wall portion 10a helps to guide the fuel nozzle 19 towards the obstruction member 3. In particular, the proximal wall portion 10a helps to centre the fuel dispensing nozzle 19 above the apex 13 of the obstruction member 3 such that the fuel nozzle is aligned with the axis X. In order to prevent the fuel nozzle 19 from contacting the obstruction member 3, the minimum diameter of the proximal wall portion 10a which tapers to the constriction 11a is less than the outer diameter of the fuel nozzle 19. It will be appreciated that the inclined nature of the proximal wall portion 10a will enable the anti siphon device to receive and centre a range of fuel nozzles having different diameters.

In addition, the embodiment shown in figure 7 comprises an annular splash guard 2a which is mounted within the tubular member 1 at a position above (i.e. upstream of) the proximal wall portion 10a, the constriction 11a and hence the obstruction member 3. The splash guard 2a helps to contain within the device any fuel splashing back from the obstruction member 3 and/or proximal wall portion 10a whilst fuel is dispensed into the device. The splash guard 2a comprises a central aperture 2b, the splash guard 2a being mounted within the tubular member 1 such that the central aperture 2b is coaxial with the axis X of the tubular member 1. Because the apex 13 of the obstruction member 3 also lies on the axis X of the tubular member 1, the central aperture 2b is aligned (vertically above in the figure) with the apex 13. The diameter of the central aperture 2b is slightly greater than the diameter of the fuel nozzle 19.

It will be appreciated that in the embodiment shown the aperture 2b of the splash guard 2a is sized so as to have a diameter which is slightly greater than the diameter of a particular fuel nozzle 19. For example, the diameter of a conventional commercial fuel dispensing nozzle is approximately 30.5mm and the corresponding aperture 2b may have a diameter of 32mm. However, other embodiments of the invention may be intended for use with different sized fuel dispensing nozzles and as such the diameter of the aperture 2b of such embodiments will be sized so that its diameter is slightly greater than that of the fuel nozzle in question. The close size of the central aperture 2b to that of the fuel nozzle 19 means that once a fuel nozzle 19 is inserted through the central aperture 2b, the fuel nozzle 19 is aligned with the apex 13 of the obstruction member along the axis X of the tubular member. Due to the close fit of the fuel nozzle 19 within the central aperture 2b, a plurality of air flow holes 2c are provided through the splash guard 2a so as to allow displaced air from the fuel tank to pass though the breather holes 8 then through the air flow holes 2c to atmosphere.

The splash guard 2a may be omitted in some embodiments of the invention. The location of the splash guard within the device may differ between embodiments. The splash guard may be located anywhere upstream of the obstruction member 3 providing the splash guard can align the fuel nozzle 19 with the apex 13 of the obstruction member 3. Although the splash guard in the described embodiments is discrete from the tubular member, it may in some embodiments be integral therewith.

The surface of the inclined proximal wall portion 10a helps to direct fuel away from the fuel nozzle 19 as fuel is dispensed from the fuel nozzle 19. Some prior art anti siphon devices, such as that shown in WO2006/048659, comprise a baffle plate at their distal end. During the filling of a fuel tank having this type of anti siphon device the fuel nozzle may be rested on the baffle plate, the dispensed fuel passing through apertures in the baffle plate and into the fuel tank. However, fuel which does not pass through the apertures in the baffle plate may collide with the baffle plate and either splash back towards the fuel nozzle or it may well above the baffle plate. If either of these conditions (also known as backflow) occur, the 'breather' conduit 21 may become obstructed by fuel causing the fuel cut off sensor to operate and cease the flow of fuel to the nozzle. The effect of this is that the flow rate of fuel being dispensed from the nozzle must be reduced so as to prevent the fuel supply being cut off by the cut off sensor. The inclined proximal wall portion 10a directs fuel towards the axis X of the device and towards the obstruction member 3. This effect is enhanced by the smooth, non-apertured surface of the proximal wall portion. By directing the fuel dispensed by the fuel nozzle 19 away from the fuel nozzle, the inclined proximal wall portion 10a helps to reduce backflow and hence enables a greater flow rate of fuel being dispensed by the fuel nozzle to be achieved without inadvertently operating the fuel cut off sensor.

In some embodiments of the invention it is preferable that the minimum diameter of the central bore 9 defined by the constriction 11a is only slightly smaller than the outside diameter of the fuel dispensing nozzle 19 (and may be greater than the diameter of the main conduit 20). It is also preferable in some embodiments of the invention that the profile of the portion of the proximal wall portion 10a which is adjacent the constriction 11a is such that the surface of the portion of the proximal wall portion is generally horn shaped. Minimising the difference between the minimum diameter of the central bore 9 defined by the constriction 11a and the outside diameter of the fuel nozzle 19 ensures that the proximal wall portion 10a protrudes less into the path of the fuel which is dispensed by the fuel nozzle 19. Reducing the amount that the proximal wall portion 10a protrudes into the path of the fuel dispensed by the fuel nozzle 19 reduces the surface area of the proximal wall portion 10a which may obstruct the flow of fuel from the fuel nozzle 19 and hence reduces the amount of backflow. Furthermore, ensuring that the surface of the portion of the proximal wall portion 10a adjacent the constriction 11a is generally horn shaped means that the surface of the portion of the proximal wall portion 10a adjacent the constriction 11a runs parallel to the axis X. Hence, any fuel that does contact the proximal wall portion 10a as it is dispensed from the fuel nozzle 19 will run down the proximal wall portion towards the obstruction member and the possibility that it will splash back against the proximal wall portion 10a towards the fuel nozzle 19 is reduced.

As previously discussed, the proximal wall portion 10a directs the fuel towards the obstruction member 3. The obstruction member 3 and the surface of the distal wall portion 10b, which surrounds the obstruction member 3, define a flow passageway 17 around the obstruction member 3. The flow passageway 17 is generally annular in cross-section (perpendicular to axis X), the inner diameter of the annulus being defined by the obstruction member 3 and the outer diameter of the annulus being defined by the distal wall portion 10b. The minimum separation distance between the obstruction member 3 and the distal wall portion 10b (also referred to as the width of the flow passageway 17) is smaller than the diameter of any practical siphoning tube. For example, the minimum separation distance may be about 5mm. It follows that the minimum separation between the obstruction member 3 and the distal wall portion 10b is less than the diameter of the constriction 11a and prevents any practical siphoning tube from passing through the anti siphon device and hence prevents siphoning of fuel from the fuel tank via the device. In the shown embodiment, the profile of the domed surface 12 of the obstruction member 3 and the profile of the distal wall portion 10b correspond such that the separation between the two surfaces at any point is constant. This constant separation between the surfaces helps to minimise turbulent flow in the fuel flowing through the flow passageway 17 and hence increases the flow rate at which fuel can pass through the device. However, in some embodiments of the present invention, the profiles of the distal wall portion 10b and domed surface 12 of the obstruction member 3 may not correspond and hence the separation between the surfaces will be different at different points.

Furthermore, in some embodiments the profiles of the domed surface and distal wall portion may be of a different general shape. For example, in some embodiments, the surface of the distal wall portion 10b may be generally domed shaped as previously described. However, the profile of the domed surface 12 of the obstruction member 3 may be defined by a surface of revolution of a concave curve shaped such that the diameter of the obstruction member 3 increases from the apex, in a axial direction away from the constriction 11a, to a maximum diameter and then decreases to a diameter smaller than the maximum diameter. An example of such an obstruction member 3 would be one with a generally oval cross section. Again, in embodiments of the invention where the obstruction member diameter increases from the apex to a maximum diameter and then decreases again, the profile of the portion of the surface of the obstruction member which defines the outlet may be generally parallel with the axis X. An obstruction member shaped such that its diameter increases from the apex to a maximum and then decreases again is beneficial in that the maximum diameter portion of the obstruction member can define the minimum separation distance between the obstruction member 3 and the distal wall portion 10b (the minimum width of the flow passageway). In addition, the decrease in the diameter of the obstruction member from the maximum diameter in a direction away from the apex can allow the cross sectional area of the flow passageway defined by the obstruction member to increase from the portion of the flow passageway defined by the maximum diameter of the obstruction to the outlet. Increasing the cross sectional area of the flow passageway will help to reduce turbulence within fuel flowing through the fuel passageway and hence increase the maximum achievable fuel flow rate through the device.

Because the proximal wall portion 10a centres the fuel nozzle 19 (and hence the fuel flow) above the apex 13 on the axis X, the fuel flowing towards the obstruction member 3 is deflected by the obstruction member 3 and distributed evenly around the obstruction member 3. This means that for a given angular segment of the flow passageway 17 at a given angular position relative to axis X, there is an approximately equal amount of fuel flowing through said angular segment of the flow passageway 17 as that which is flowing through an identical angular segment of the flow passageway 17 at any different angular position relative to axis X. Distributing the fuel evenly around the flow passageway 17 in this manner increases the rate at which fuel can pass through the device because the entire flow capacity of every part of the flow passageway 17 can be used. Thus, for a given flow rate, the occurrence of backflow is minimised.

As previously discussed, the proximal wall portion 10a of the described embodiment prevents the fuel nozzle 19 from contacting the obstruction member 3. In some embodiments this is beneficial as the spacing between fuel nozzle 19 and the obstruction member 3 allows non-turbulent (or laminar) flow from the fuel nozzle 19 to the flow passageway 17. Laminar flow allows for greater flow rates of fuel through the device. In the described embodiment, the apex 13 of the obstruction member 3 lies at a point just below the proximal wall portion 10a (i.e. just below the constriction 11a). This need not be the case. The apex 13 of the obstruction member 3 may be some distance below the constriction 11a (i.e. within the part of the bore 9 defined by the distal wall portion 10b); in line with the constriction 11a; or within the part of the bore 9 which is defined by the proximal wall portion 10a. It will be appreciated that in certain embodiments, where the apex 13 lies within the portion of the bore 9 which is defined by the proximal wall portion 10a, the fuel nozzle 19 may still be prevented from contacting the obstruction member 3 by the proximal wall portion 10a. In these embodiments, the fuel nozzle 19 will be abut the proximal wall portion 10a at a position above the apex 13 or the fuel nozzle will abut the surface of the proximal wall portion 10a at a position below the apex 13 such that the apex 13 will protrude into the main conduit 20 of the filler nozzle 19.

The surfaces which define the flow passageway 17, namely the distal wall portion 10b and domed surface 12 of the obstruction member 3, are smooth and free of apertures so as to minimise turbulent flow of fuel through the flow passageway 17. However, in some embodiments this need not be so. For example, the obstruction member may be provided at least one aperture. The at least one aperture may be axial. Furthermore, the distal wall portion may be provided with apertures. These apertures may be generally radial.

Fuel flows through the flow passageway 17 to the outlet 18 in the distal end of the device. As previously mentioned, the outlet 18 is defined by the engagement portions 14e of the obstruction member 3. The engagement portions 14e of the obstruction member 3 each comprise a curved upper surface 16 which faces in the general direction of the apex 13 of the obstruction member 3. The curved surface 16 acts to guide (or streamline) fuel flow around the engagement portions 14e and hence reduces any disruption to the flow of fuel through the flow passageway 17 which may be caused by the engagement portions 14e. Consequently, the occurrence of turbulent flow of the fuel within the flow passageway 17 due to the engagement portions 14e is minimised. It will be appreciated that the curved upper surface 16 of the engagement portions may not be present in all embodiments of the present invention. However, it is preferred that the upper surface of the engagement portions 14e is of a shape which helps to streamline fuel flow around the engagement portions 14e. For example, the upper surface of the engagement portions may be pitched.

Due to both the domed surface 12 of the obstruction member 3 and the distal wall portion 10b having profiles which are substantially parallel to axis X at the outlet 18, fuel flow from the outlet 18 is directed in a direction parallel to the axis X of the tubular member 1.

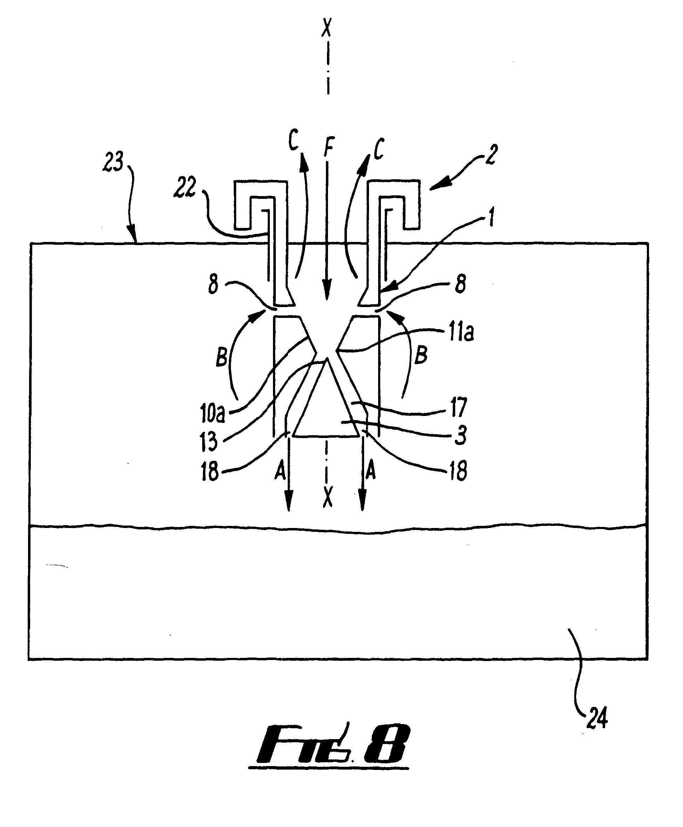

Figure 8 shows a schematic representation of the embodiment of the invention shown in figure 1 mounted within an inlet 22 of a fuel tank 23. The attachment means 2 of the anti siphon device is secured to the inlet 22 of the fuel tank 23. The flow of fuel into the device (for example from a fuel dispensing nozzle, as previously discussed) is indicated generally by arrow F. As indicated by the arrows A, fuel flows from the outlet in the distal end of the device into the fuel tank 23. The direction A of the fuel flow from the device is generally parallel to the axis X of the device. Due to the non-turbulent nature of the fuel flow through and out of the device, the fuel flowing from the device forms a generally tubular 'curtain' which extends from the distal end of the device, in a direction parallel to the axis X, to the fuel 24 within the fuel tank 23.

As the volume of the fuel 24 within the tank 23 increases, air within the tank is displaced. The displaced air tries to exit the tank and pass to atmosphere via the anti siphon device. The 'curtain' of fuel acts to prevent the displaced air from attempting to pass through the anti siphon device via the outlet 18 and fluid flow passageway 17. Hence, the flow of fuel through the device is not impeded by the movement of the displaced air towards atmosphere. In preference, the displaced air follows a path indicated generally by arrows B towards the breather holes 8. The air then passes through the breather holes 8 and follows a path, indicated generally by arrows C, out of the device to atmosphere.

Unlike in the present invention, if the displaced air and incoming fuel, which are travelling in opposite directions, attempt to pass through the same part of the anti siphon device they will impede each other. That is to say, when fuel and the air try to simultaneously pass through the same part of the device the maximum achievable flow rate of fuel through the device will be reduced and 'backflow' due to the movement of the displaced air will increase.

The breather holes 8 are located closer to the opening in the proximal end of the tubular body 1 than the end of a fuel nozzle which is inserted into the device. This is because, as previously discussed, a fuel nozzle inserted into the device will rest near the end of the surface of the proximal wall portion 10a closest to the obstruction member 3 (i.e. adjacent to the constriction 11a). Because fuel dispensed from the fuel nozzle enters the device at a position below the breather holes 8, the fuel passing into the inlet does not obstruct the air passing out of the breather holes 8 above. As a result, the displaced air passes though the device to atmosphere easily and hence any back pressure (pressure which opposes the entry of fuel into the tank 23) within the tank 23 is minimised.

The 'curtain' of fuel flowing from the device may be of further benefit due to the fact that the 'curtain' flows generally parallel to the axis X of the device (i.e. in a vertical direction in the embodiment shown in figure 8).

The 'curtain' of fuel emitted from the shown device according to the present invention extends directly from the outlet 18 to the fuel 24 (vertically downwards in the shown embodiment). It follows that the fuel 'curtain' does not cross the path taken by the majority of the displaced air as it travels to the breather holes 8, and hence the fuel 'curtain' does not form a barrier which impedes the passage of the displaced air towards the breather holes 8. Hence, because the displaced air can travel to the breather holes 8 relatively freely, 'back pressure' within the fuel tank 23 is minimised and hence fuel flow through the device can be maximised. Any radial outward movement of incoming fuel may result in the fuel forming a barrier between the base of the fuel tank and the breather holes which inhibits the passage of some of the displaced air within the tank towards the breather holes (indicated by arrows B). By inhibiting the passage of the displaced air to the breather holes, the fuel barrier formed may result in 'back pressure' developing within the fuel tank which opposes the inflow of fuel in to the fuel tank and hence reduces the maximum fuel flow rate through the anti siphon device.

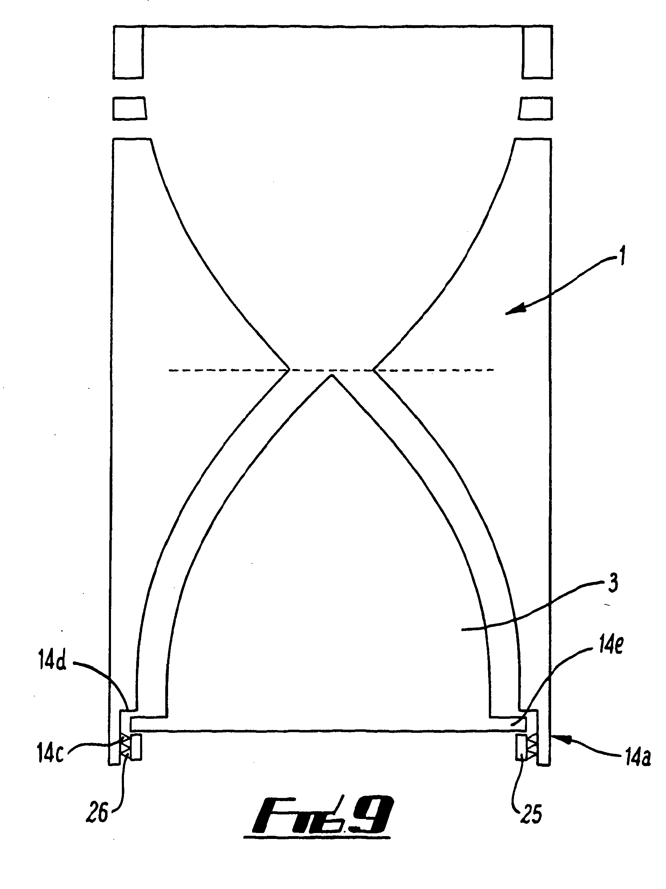

Figure 9 shows a cross-section through part of a device in accordance with a second embodiment of the present invention. The embodiment shown in figure 9 comprises an alternative means of securing the obstruction member 3 within the tubular body 1. The obstruction member 3 is identical to that already described in relation to the first embodiment, except that the engagement portions 14e have less depth in the direction of the axis X and do not comprise a screw thread. A retaining ring 25 has a screw thread 26 on its radially outermost surface. The screw thread 26 co-operates with the screw thread 14c on the internal face of the engagement portion 14a of the tubular member 1. Hence, the obstruction member 3 can be mounted within the tubular member 1 by screwing the retaining ring 25 into the engagement portion 14a such that the engagement portions 14e of the obstruction member 3 are secured between the shoulder 14d of the engagement portion 14a and the retaining ring 25. The dimensions of the retaining ring 25 are preferably chosen such that the retaining ring 25 does not extend radially inwards beyond the engagement portions 14e of the obstruction member 3. This ensures that the outlet 18 defined by the domed surface 12 of the obstruction member 3 and the distal wall portion 10b is not completely occluded by the retaining ring 25. However, any configuration of retaining ring 25 may be used providing it does not completely occlude the outlet 18. For example, the retaining ring may extend radially inward of the engagement portions 14e and comprise holes which allow fuel to pass from the outlet 18 and through the retaining ring 25.

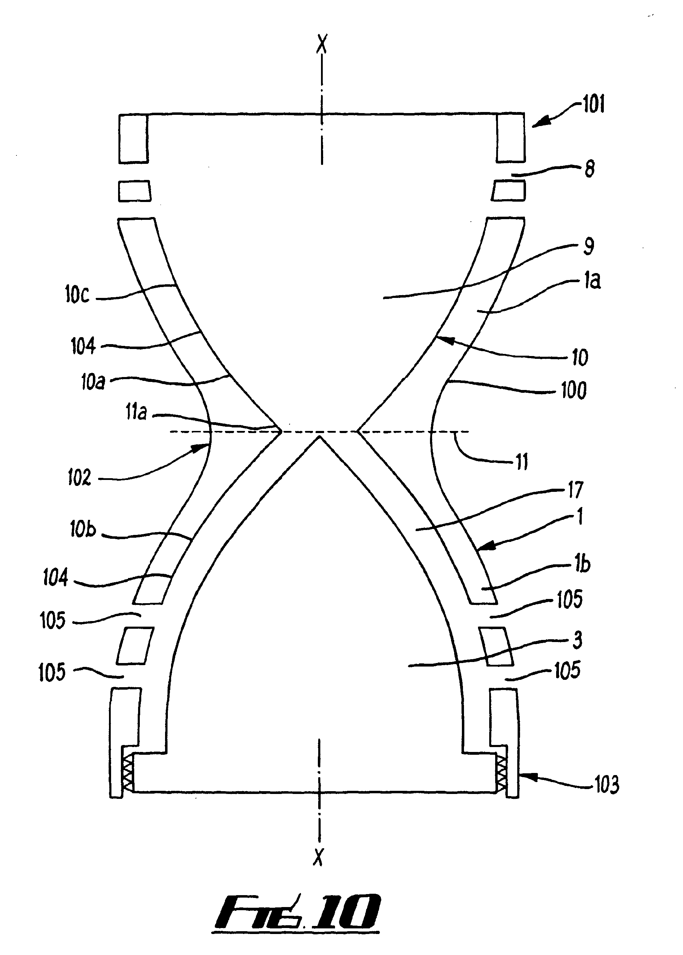

Figure 10 shows a cross-section through a portion of a further embodiment of the invention. In a similar manner to the previously described embodiments, the tubular body 1 has a central bore 9 defined by a wall 10. The tubular body 1 may be thought of as comprising a proximal portion 1 a (above dashed line 11) having a proximal wall portion 10a and a distal portion 1 b (below dashed line 11) having a distal wall portion 10b.

The proximal wall portion 10a comprises a tapered portion 10c which is tapered in the direction of axis X and leads to a constriction 11a. The proximal wall portion 10a defines a domed surface which generally decreases in diameter (perpendicular to the axis X) moving towards the constriction 11a. The diameter of the proximal wall portion 10a decreases to a non-zero minimum at the constriction 11a. Radial breather holes 8 pass from the exterior of the proximal portion 1 a of the tubular body and open onto the proximal wall portion 10a of the tubular body 1.

The distal wall portion 10b also comprises a constant diameter portion at its distal end and a portion which is generally inclined relative to the axis X. The distal wall portion 10b defines a domed surface which generally increases in diameter (perpendicular to the axis X) moving away from the constriction 11a. The diameter of the distal wall portion 10b is a non-zero minimum at the constriction 11a.

An obstruction is provided within the tubular body 1. The obstruction comprises a domed obstruction member 3 which is mounted within the portion of the bore 9 defined by the distal wall portion 10b.

The embodiment of the invention shown in figure 10 differs from the previously described embodiments in that the diameter of the radially outer surface 100 of the tubular body 1 is not substantially constant. The diameter of the radially outer surface 100 of the tubular body 1 generally decreases from the proximal end 101 of the tubular body 1 to a minimum at a constricted region 102 of the radially outer surface of the tubular body 1. The diameter of the radially outer surface 100 of the tubular body 1 then generally increases from the constricted region 102 of the radially outer surface of the tubular body 1 to the distal end of the tubular body 103.

The tubular body 1 has a generally hourglass shape.

In the shown embodiment, the constricted region 102 of the radially outer surface of the tubular body 1 and the constriction 11a are located at substantially the same position along the axis X. In other embodiments, this need not be the case. Furthermore, in the shown embodiment, the profile of a portion of the radially outer surface 100 relative to the axis X generally corresponds to the profile of a portion of the radially inner surface 104 of the tubular member 1 relative to axis X. This need not be the case in other embodiments of the invention. For example, the profile of the radially inner surface 104 of the tubular body 1 relative to axis X may be different to the profile of the radially outer surface 100 of the tubular body 1 relative to axis X.

The portion of the tubular body 1 having a profile of the radially outer surface 100 which generally corresponds to the profile of the radially inner surface 104 has a substantially constant thickness.

In the embodiment shown, a portion of the profile of the radially outer surface 100 of the proximal wall portion 10a substantially corresponds to the profile of the radially inner surface 104 of the proximal wall portion 10a; and a portion of the profile of the radially outer surface 100 of the distal wall portion 10b substantially corresponds to the profile of the radially inner surface 104 of the proximal wall portion 10b. This need not be the case in some embodiments. For example, only one of the proximal wall portion 10a and distal wall portion 10b may have a portion of the profile of the radially outer surface 100 of the tubular body 1 which substantially corresponds to the profile of the radially inner surface 104 of the tubular body 1.

The radially outer surface of the tubular body may have any appropriate profile relative to axis X.

The structure of the tubular body 1 shown in figure 10 which comprises constricted region 102 of the radially outer surface of the tubular body 1 may be advantageous in some applications of the anti siphon device as follows. As previously discussed, in some applications, the anti siphon device may be mounted such that the tubular body 1 is located within a fuel tank inlet pipe. In this situation, the clearance between the tubular body 1 and the fuel tank inlet pipe may be small. When fuel is passed though the anti siphon device, so as to fill a fuel tank, displaced air flows from the fuel tank to the breather holes 8 via a flow path defined between the radially outer surface 100 of the tubular body 1 and a radially inner surface of the fuel tank inlet pipe. The displaced air then passes through the breather holes 8 to atmosphere. The constricted region 102 of the radially outer surface 100 of the tubular body 1 has a reduced diameter compared to the rest of the radially outer surface of the tubular body 1. For this reason the clearance between the constricted region 102 of the radially outer surface 100 of the tubular body 1 and the radially inner surface of the fuel tank inlet pipe will be greater than the clearance between the radially outer surface 100 of a similar tubular body 1, which has a substantially constant outer diameter, and the radially inner surface of the fuel tank inlet pipe. It follows that a tubular member 1 having a constricted region will define a flow path defined between the radially outer surface 100 of the tubular body 1 and the radially inner surface of the fuel tank inlet pipe which has a greater cross-sectional area (perpendicular to axis X) adjacent the constricted region compared to the cross sectional area of part of the flow path defined between the radially outer surface of a similar tubular body, which has a substantially constant outside diameter, and the radially inner surface of the fuel tank inlet pipe. For this reason the flow rate of displaced air through the flow path defined between the radially outer surface of the tubular body and the radially inner surface of the fuel tank inlet pipe is greater for a tubular member having a constricted region compared to the flow rate of displaced air for a similar tubular member which has a substantially constant outside diameter. It follows that the maximum flow rate of fuel through an anti siphon device having a tubular member with a radially outer surface having a constricted region is improved compared to that through an similar anti siphon device having a tubular member which does not have a radially outer surface that has a constricted region (i.e. which has a substantially constant outside diameter).

A further advantage of a tubular member which has a constricted region of the outside diameter, compared to a similar tubular member which has a substantially constant outside diameter, is that the tubular member with the constricted region will use less material in its manufacture and will therefore be less expensive and less heavy.

The embodiment of the invention shown in figure 10 also differs from the previously described embodiments in that it has a plurality of fuel flow 105 apertures which pass from the radially inner surface of the distal wall portion 10b to the radially outer surface 100 of the distal wall portion 10b. It has been found that, in some embodiments of anti siphon device according to the present invention, when fuel is passed through the anti siphon device, pressure in the flow passageway 17 (defined by the obstruction member 3 and distal wall portion 10b) may increase. Pressure in the flow passageway may increase to a level whereby the flow of fuel through the anti siphon device is impeded, thus limiting the flow rate of fuel through the device. The fuel flow apertures 105 provide additional flow paths for the fuel to flow from the flow passageway 17 to the exterior of the anti siphon device (for example, into a fuel tank). It follows that, because the fuel flow apertures 105 provide additional flow paths for the fuel to flow from the flow passageway 17 to the exterior of the anti siphon device, the pressure in the flow passageway for a given flow rate of fuel through the device is reduced. For this reason, the provision of fuel flow apertures 105 increase the maximum flow rate of fuel through the anti siphon device.

It will be appreciated that, although the fuel flow apertures 105 shown in figure 10 have a particular shape and arrangement, any appropriate shape and/or arrangement of fuel flow apertures may be used providing the fuel flow apertures pass from the radially inner surface of the distal wall portion to the radially outer surface of the distal wall portion.

Figure 11 a shows a fuel tank inlet pipe 110. The fuel tank inlet pipe 110 comprises first and second generally tubular portions (112 and 114 respectively) each having a longitudinal axis. The first portion 112 and second portion 114 are mounted relative to one another such that there is an angle between their longitudinal axes. It follows that the fuel tank inlet pipe 110 and be said to have a bend in it. The first portion 112 comprises an opening 116 which permits the insertion of a fuel filler nozzle 118 into the fuel tank inlet pipe 110. Fuel can be introduced into the fuel tank inlet pipe 110 via the opening 116. The fuel then flows through the fuel tank inlet pipe 110 away from the opening and towards the fuel tank (not shown).

The fuel filler nozzle 118 comprises a device which automatically stops the flow of fuel to the fuel filler nozzle 118 when the level of fuel within the fuel tank inlet pipe 110 reaches the fuel filler nozzle 118. It follows that when fuel reaches the level indicated by dashed line 120, the flow of fuel to the fuel filler nozzle 118 will be stopped.

Figure 11 b shows the fuel tank inlet pipe of figure 11a, but with an anti siphon device 122 mounted within the opening 116. The anti siphon device 122 comprises a tubular body 124. The tubular body 124 has an opening at a first end and an obstruction member 128 located within the tubular body 124. In some anti siphon devices the obstruction member 128 and tubular member 124 may be of one-piece construction. The obstruction member 128 substantially prevents the passage of a siphon tube through the anti siphon device 122 to the fuel tank (not shown), and therefore substantially prevents the siphoning of fuel from the fuel tank.

The anti siphon device 122 is sized such that it can only be inserted a certain distance into the fuel tank inlet pipe 110. It can be seen within figure 11 b that a second end of the tubular body 124 abuts the second tubular body 114 such that the anti siphon device cannot be located any further into the fuel tank inlet pipe 110.

In order to fill the fuel tank with fuel, the fuel filler nozzle 118 is inserted into the opening 116 of the anti siphon device 110. The fuel filler nozzle 118 cannot pass the obstruction member 128. Because of the location of the fuel filler nozzle 118 when filling the fuel tank with fuel, the flow of fuel to the fuel filler nozzle 118 will be automatically stopped when the fuel reaches the level shown by dashed line 130.

When the level of the fuel is at the dashed line 130, the fuel is closer the opening 116 of the fuel tank inlet pipe 110 than it is when the level of the fuel is at the dashed line 120. Because of this, when filling the fuel tank using the anti siphon device 122 shown in figure 11b, it is much more likely that fuel will splash back or leak from the opening 116 of the fuel inlet pipe 110 before the flow of fuel to the fuel filler nozzle 118 is automatically stopped. If fuel splashes back or leaks from the opening 116 of the fuel inlet pipe 110 before the flow of fuel to the fuel filler nozzle 118 is automatically stopped, then this can be dangerous.

Figure 11 c shows an anti siphon device 122a in accordance with an embodiment of the present invention mounted within the fuel inlet pipe 110 shown in figures 11 a and 11 b via an attachment means (not shown). The anti siphon device 122a comprises a tubular body 124a. The tubular body 124a has an opening at a first end, an obstruction member 128a located within the tubular body 124a, and an outlet 132 at a second end. In some embodiments the obstruction member 128a and tubular member 124a may be of one-piece construction. The outer diameter of the tubular member 124a at the second end is less than that of the first end. In some embodiments, the outer diameter of the tubular member 124a at the second end may be less than the inner diameter of the tubular member at a first end. Furthermore, in some embodiments, the outer diameter of the tubular member 124a at the second end may be less than the outer diameter of a filler nozzle 118 which can be received by the anti siphon device 122a.

Due to the fact that the outer diameter of the second end of the tubular member 124a of the anti siphon device 122a is less than the outer diameter of the first end of the tubular member 124a, the anti siphon device shown in figure 11c can be inserted further into the fuel inlet pipe 110 compared to the anti siphon device 122 shown in figure 11b. The level at which a fuel will automatically be stopped from flowing to the fuel filler nozzle 118 using the anti siphon device according to an embodiment of the invention is indicated by dashed line 134. The level 134 at which a fuel will automatically be stopped from flowing to the fuel filler nozzle 118 using the anti siphon device according to an embodiment of the invention is further away from the opening 116 of the fuel inlet pipe 100 than the level 130 at which a fuel will automatically be stopped from flowing to the fuel filler nozzle 118 using the anti siphon device shown in figure 11 b. For this reason the use of an anti siphon device 122a in accordance with an embodiment of the present invention reduces the likelihood of splash back or leakage from the opening 116 of the fuel inlet pipe 110 before the flow of fuel to the fuel filler nozzle 118 is automatically stopped.

It will be appreciated that it is within the scope of the invention to combine any of the features of the different described embodiments.

It will be appreciated that in other embodiments of the invention the dimensions of the obstruction member 3, and the dimensions of the obstruction member 3 relative to the dimensions of the tubular body 1 (and hence of distal wall portion 10b), may vary from those illustrated in the figures. Similarly, the profile of the domed surface 12 of the obstruction member 3 may vary from that illustrated. However, it is preferred that the flow passageway 17 defined by the obstruction member 3 and distal wall portion 10b hinders insertion of a siphon tube of any significant size (for example of 5mm or greater) into the fuel tank via the inlet. For instance, for a siphon tube approaching the size of a conventional fuel filler nozzle, it would be difficult if not impossible to insert the siphon tube into the inlet body 1 past the obstruction member 3. This raises the level of fuel below which siphoning is practically possible, thereby limiting the amount of fuel that might be siphoned from a full fuel tank.

In addition, the obstruction member 3 according to the present invention is advantageously resistant to tampering. A method of circumventing known anti-siphon inlets, as for instance described in WO2006/048659 referenced above, is to knock the obstruction (a baffle in this case) out of the tubular body, or puncture the baffle, for instance using a hammer and chisel. With the present invention, the curved, smooth outer surface of the obstruction member 3 makes it difficult for a chisel to gain purchase on the domed surface 12 of the obstruction member 3, thereby providing improved resistance to this form of attack. Furthermore, since there is no requirement to provide apertures in the obstruction member 3, the obstruction member can be constructed as a solid block, which increases the strength of the obstruction member 3 as compared with a conical baffle "plate" as for instance described in WO2006/048659.

It will be appreciated that many other modifications may be made to the embodiments of the invention described above. For instance, the mounting structure 2 may vary from that illustrated and may have any form suitable for attachment to the inlet of a vehicle fuel tank (or any other tank) to which the anti-siphon inlet is to be fitted. For instance, in some embodiments a simple radially extending flange provided at the proximal end of the tubular body 1 may be sufficient, particularly for example where the tank inlet does not have a cylindrical neck but is simply an aperture in a wall of the tank.

Similarly, it will be appreciated that the configuration of breathing holes provided through the tubular body 1 may vary significantly from that illustrated.

It will also be appreciated that the detailed dimensions and configurations of the obstruction member 3 may vary from that illustrated without departing from the present invention.

It will further be appreciated that the invention is not limited to anti-siphon inlets adapted for fitting to vehicle fuel tanks, but may have application to other fluid tanks or containers.

It will be appreciated that although the profiles of the distal and proximal wall portions parallel to the axis of the tubular member are the same in the shown embodiment, this need not be the case. The distal and proximal wall portions may have any appropriate profile. Furthermore, said profiles of the proximal and distal wall portions are a surface of revolution of a convex curve. As previously stated, the profiles may be of different types and may be, for example, a surface of revolution of a straight line or concave curve. The profiles need not be a surface of revolution. For example, the proximal and distal wall portions may not be totally rotationally symmetric, they may comprise projections or other discontinuities. In the case of the proximal wall portion, such projections or discontinuities may help to guide or locate an inserted fuel nozzle. Such projections or discontinuities may be radial relative to the axis of the tubular member or may be circumferential or arcuate. One example of such a projection is a circumferential lip. The lip may have a generally L-shaped cross-section.

It will further be appreciated that the obstruction member described is a smooth, solid block that is a surface of revolution of a convex curve and has a point apex. This need not be the case. The obstruction member may take any appropriate form. It may have a profile which is a surface of revolution of a straight line or concave curve. It may be hollow. It may not be entirely rotationally symmetric. Any shape of obstruction member may be used providing it defines a flow passageway in combination with the distal wall portion and providing the obstruction member defines an outlet in the distal end of the device. The apex may be blunted or may just be a portion of the obstruction member which is of a lesser diameter relative to the axis of the tubular member compared to the diameter of a portion of the obstruction member which is downstream of the apex.

It will also be appreciated that any appropriate means may be used to secure the obstruction member within the tubular member. For example, the obstruction member may comprise a radially projecting rim, the rim being secured between a shoulder and a retaining member in a similar manner to that discussed above. In the case where the obstruction member comprises a rim, the rim may contain at least one aperture which allows fuel to flow through the fuel passageway and through the at least one aperture to the outlet. Depending on the attachment means, the outlet may not be defined by part of the attachment means.

An embodiment of the device according to the present invention may incorporate an anti spill valve. An example of such an anti spill valve is a flap which is biased towards a closed position in which it obstructs the passage of fuel through the device (especially from the fuel tank) when a fuel dispensing nozzle or the like is not inserted into the device. Inserting a fuel dispensing nozzle or the like into a device with an flap anti spill valve will move the flap to an open position in which fuel can flow through the device. Any such flap anti spill valve may be mounted within the tubular body such that the flap does not obscure any air flow holes in the splash guard (if present) or breather holes. This will help to maximise the out flow of displaced air from the fuel tank via the device and hence increase the maximum achievable fuel flow rate through the device.

It will be appreciated that although the obstruction in the described embodiments comprises a discrete obstruction member, the obstruction may be integral with the wall, the surface of which defines the flow passageway. Furthermore, the wall of the described embodiments, the surface of which defines the flow passageway, is integral with the tubular member. This need not be the case. The wall, the surface of which defines the flow passageway, may be defined by a separate wall member which is discrete from the tubular body.

## Claims

1. An anti siphon device, comprising:
a generally tubular body (1) having a longitudinal axis (X);
an outlet (18);
an inlet; the inlet having an opening adapted to receive a fuel dispensing nozzle the end of which has an outside diameter D; an obstruction (3); and a flowpassageway (17) **characterized in that** the inlet having a constriction (11a) spaced from said opening along said axis and having a diameter d less than D;
at least a major portion of the obstruction is located between the constriction (11a) and the outlet (18), the obstruction (3) tapering outwardly relative to the axis in a direction from the constriction (11a) to the outler (18), and
the flow passageway (17) extends from the constriction (11a) to the outlet (18) and defined between the obstruction (3) and a wall surface (10b) at least substantially surrounding the obstruction (3), the flow passageway (17) having a minimum width less than the diameter d of the constriction (11a);
wherein at least a portion of the inlet is defined by a wall surface (10a) which tapers inwardly in the direction of said axis to said constriction (11a) and is adapted to support the end of the fuel dispensing nozzle (19).

2. An anti siphon device according to claim 1, additionally comprising a generally annular splash guard member (2a) mounted within the inlet and having an aperture (2b) axially aligned with the constriction and having a diameter adapted to receive the fuel dispensing nozzle with diameter D;
and optionally
wherein the obstruction comprises an apex which lies on said axis X and wherein said aperture extends along axis X.

3. An anti siphon device according to claim 2, wherein the splash guard member (2a) comprises at least one air flow hole.

4. An anti siphon device according to any of the preceding claims, wherein the tapered wall surface is defined by at least part of a first surface of revolution of a first line about a first revolution axis;
and optionally
wherein the first revolution axis is the axis (X).

5. An anti siphon device according to claim 4, wherein the line is either a straight line or a curve so that said tapered wall surface is frustro-conical or domed respectively.

6. An anti siphon device according to any of the preceding claims, wherein the obstruction (3) comprises a surface at least part of which is defined by at least a part of a surface of revolution of a second line about a second revolution axis;
and optionally
wherein the second revolution axis is the axis (X) and/or the first revolution axis.

7. An anti siphon device according to claim 6, wherein the second line is either a straight line or a curved line so that said at least a part of said surface of the obstruction is conical, frustro-conical or domed.

8. An anti siphon device according to any of the preceding claims, wherein the obstruction comprises an apex;
and optionally
wherein said apex lies on axis (X) and/or the first revolution axis.

9. An anti siphon device according to any of the preceding claims,
wherein the obstruction (3) comprises a surface, at least part of which is parallel to the axis (X), the outlet (18) being defined between said wall surface at least substantially surrounding the obstruction and said at least part of the surface of the obstruction;
and/or
wherein a portion of a surface of the obstruction which defines said at least one flow passageway is free from apertures;
and/or
wherein the cross sectional shape of the outlet perpendicular to the axis (X) is annular or part annular;
and/or
wherein the profile parallel to axis (X) of at least a part of said wall surface at least substantially surrounding the obstruction corresponds to the profile parallel to the axis (X) of at least a part of the obstruction;
and/or
wherein the tubular body comprises at least one breather hole; and optionally, wherein the at least one breather hole is provided such that it opens at a first end to the exterior of the tubular body and at a second end to the tapered wall surface.

10. An anti siphon device according to any preceding claim, wherein the obstruction (3) comprises an obstruction member and said wall surface at least substantially surrounding the obstruction is defined by a wall portion, said obstruction member and said wall member being discrete;
and optionally,
wherein said wall portion and said tubular body are integral.

11. An anti siphon device according to either claim 10, wherein the obstruction member comprises at least one first engagement portion (14e) and the wall portion comprises at least one second engagement portion (14a), the or each at least one first engagement portion and the or each at least one second engagement portion co-operating so as to mount the obstruction within the tubular inlet body;
and optionally
wherein the or each at least one first engagement portion (14e) comprises a radial projection with respect to the axis (X), and optionally, wherein the radial projection defines at least part of the outlet.

12. An anti siphon device according claim 11, wherein the or each at least one second engagement portion (14a) provided with a screw thread (14c)
and optionally
wherein said screw thread faces axis (X).

13. An anti siphon device according to claim 12, when dependant on claim 11, wherein the radial projection comprises a screw thread (15) which is complementary to the screw thread (14c) of the or each second engagement portion (14a).

14. An anti siphon device according to any of claims 11 to 13, wherein the or each second engagement portion comprises a shoulder which extends radially inward with respect to axis (X).

15. An anti siphon device according to claim 14, when dependant either claim 11 or claim 12, additionally comprising a retaining member (25) having a screw thread (26) which is complementary to that of the or each second engagement portion (14a), wherein the radial projection is secured between the shoulder (14d) and the retaining member (25) and wherein the retaining member (25) is secured to the or each second engagement portion by the co-operation of the screw thread (26) of the retaining member and the screw thread (14c) of the or each second engagement portion (14a).

## Patentansprüche

1. Absaugschutzvorrichtung, die Folgendes umfasst:
einen im Allgemeinen röhrenförmigen Körper (1), der eine Längsachse (X) aufweist,
einen Auslass (18),
einen Einlass, wobei der Einlass eine Öffnung, die dafür eingerichtet ist, eine Kraftstoff-Abgabedüse, deren Ende einen Außendurchmesser D aufweist, aufzunehmen, eine Sperre (3) und einen Strömungsdurchgang (17) aufweist, **dadurch gekennzeichnet, dass** der Einlass eine Verengung (11a) umfasst, die mit Zwischenraum von der Öffnung entlang der Achse angeordnet ist und einen Durchmesser d, der geringer ist als D, aufweist,
wobei wenigstens ein Hauptteil der Sperre zwischen der Verengung (11a) und dem Auslass (18) angeordnet ist, wobei sich die Sperre (3) nach außen im Verhältnis zu der Achse in einer Richtung von der Verengung (11a) zu dem Auslass (18) verjüngt, und
wobei sich der Strömungsdurchgang (17) von der Verengung (11a) zu dem Auslass (18) erstreckt und zwischen der Sperre (3) und einer Wandfläche (10b), welche die Sperre (3) wenigstens im Wesentlichen umschließt, definiert wird, wobei der Strömungsdurchgang (17) eine minimale Breite hat, die geringer ist als der Durchmesser d der Verengung (11a), wobei wenigstens ein Abschnitt des Einlasses durch eine Wandfläche (10a) definiert wird, die sich nach innen in der Richtung der Achse zu der Verengung (11a) verjüngt und dafür eingerichtet ist, das Ende der Kraftstoff-Abgabedüse (19) zu stützen.

2. Absaugschutzvorrichtung nach Anspruch 1, die außerdem ein im Allgemeinen ringförmiges Spritzschutzelement (2a) umfasst, das innerhalb des Einlasses angebracht ist und eine Öffnung (2b) aufweist, die in Axialrichtung mit der Verengung ausgerichtet ist und einen Durchmesser aufweist, der dafür eingerichtet ist, die Kraftstoff-Abgabedüse mit dem Durchmesser D aufzunehmen
und wahlweise
wobei die Verengung einen Scheitel umfasst, der auf der Achse X liegt, und wobei sich die Öffnung entlang der Achse X erstreckt.

3. Absaugschutzvorrichtung nach Anspruch 2, wobei das Spritzschutzelement (2a) wenigstens ein Luftströmungsloch umfasst.

4. Absaugschutzvorrichtung nach einem der vorhergehenden Ansprüche, wobei die verjüngte Wandfläche durch wenigstens einen Teil einer ersten Rotationsfläche einer ersten Linie um eine erste Rotationsachse definiert wird,
und wahlweise
wobei die erste Rotationsachse die Achse (X) ist.

5. Absaugschutzvorrichtung nach Anspruch 4, wobei die Linie entweder eine gerade Linie oder eine Kurve ist, so dass die verjüngte Wandfläche kegelstumpfförmig beziehungsweise gewölbt ist.

6. Absaugschutzvorrichtung nach einem der vorhergehenden Ansprüche, wobei die Sperre (3) eine Fläche umfasst, von der wenigstens ein Teil durch wenigstens einen Teil einer Rotationsfläche einer zweiten Linie um eine zweite Rotationsachse definiert wird
und wahlweise
wobei die zweite Rotationsachse die Achse (X) und/oder die erste Rotationsachse ist.

7. Absaugschutzvorrichtung nach Anspruch 6, wobei die zweite Linie entweder eine gerade Linie oder eine Kurve ist, so dass der wenigstens eine Teil der Fläche der Sperre kegelförmig, kegelstumpfförmig oder gewölbt ist.

8. Absaugschutzvorrichtung nach einem der vorhergehenden Ansprüche, wobei die Verengung einen Scheitel umfasst
und wahlweise
wobei der Scheitel auf der Achse (X) und/oder der ersten Rotationsachse liegt.

9. Absaugschutzvorrichtung nach einem der vorhergehenden Ansprüche, wobei die Sperre (3) eine Fläche umfasst, von der wenigstens ein Teil parallel zu der Achse (X) ist, wobei der Auslass (18) zwischen der Wandfläche, die wenigstens im Wesentlichen die Sperre umschließt, und dem wenigstens einen Teil der Fläche der Sperre definiert wird,
und/oder
wobei ein Abschnitt einer Fläche der Sperre die den wenigstens einen Strömungsdurchgang definiert, frei von Öffnungen ist,
und/oder
wobei die Querschnittsform des Auslasses, senkrecht zu der Achse (X), ringförmig oder teilringförmig ist,
und/oder
wobei das Profil, parallel zu der Achse (X), von wenigstens einem Teil der Wandfläche, die wenigstens im Wesentlichen die Sperre umschließt, dem Profil, parallel zu der Achse (X), von wenigstens einem Teil der Sperre entspricht,
und/oder
wobei der röhrenförmige Körper wenigstens ein Lüftungsloch umfasst, und wahlweise wobei das wenigstens eine Lüftungsloch derart bereitgestellt wird, dass es sich an einem ersten Ende zu dem Äußeren des röhrenförmigen Körpers und an einem zweiten Ende zu der verjüngten Wandfläche öffnet.

10. Absaugschutzvorrichtung nach einem der vorhergehenden Ansprüche, wobei die Sperre (3) ein Sperrelement umfasst und die Wandfläche, die wenigstens im Wesentlichen die Sperre umschließt, durch einen Wandabschnitt definiert wird, wobei das Sperrelement und das Wandelement getrennt sind,
und wahlweise
wobei der Wandabschnitt und der röhrenförmige Körper integral sind.

11. Absaugschutzvorrichtung nach Anspruch 10, wobei das Sperrelement wenigstens einen ersten Eingriffsabschnitt (14e) umfasst und der Wandabschnitt wenigstens einen zweiten Eingriffsabschnitt (14a) umfasst, wobei der oder jeder wenigstens eine erste Eingriffsabschnitt und der oder jeder wenigstens eine zweite Eingriffsabschnitt zusammenwirken, um so die Sperre innerhalb des röhrenförmigen Einlasskörpers anzubringen,
und wahlweise
wobei der oder jeder wenigstens eine erste Eingriffsabschnitt (14e) einen radialen Vorsprung in Bezug auf die Achse (X) umfasst, und wahlweise wobei der radiale Vorsprung wenigstens einen Teil des Auslasses definiert.

12. Absaugschutzvorrichtung nach Anspruch 11, wobei der oder jeder wenigstens eine zweite Eingriffsabschnitt (14a) mit einem Schraubengewinde (14c) versehen ist,
und wahlweise
wobei das Schraubengewinde der Achse (X) gegenüberliegt.

13. Absaugschutzvorrichtung nach Anspruch 12, wenn abhängig von Anspruch 11, wobei der radiale Vorsprung ein Schraubengewinde (15) umfasst, das komplementär zu dem Schraubengewinde (14c) des oder jedes zweiten Eingriffsabschnitts (14a) ist.

14. Absaugschutzvorrichtung nach einem der Ansprüche 11 bis 13, wobei der oder jeder zweite Eingriffsabschnitt einen Absatz umfasst, der sich in Radialrichtung nach innen in Bezug auf die Achse (X) erstreckt.

15. Absaugschutzvorrichtung nach Anspruch 14, wenn abhängig von Anspruch 11 oder 12, die außerdem ein Rückhalteelement (25) umfasst, das ein Schraubengewinde (26) aufweist, das komplementär zu demjenigen des oder jedes zweiten Eingriffsabschnitts (14a) ist, wobei der radiale Vorsprung zwischen dem Absatz (14d) und dem Rückhalteelement (25) befestigt ist und wobei das Rückhalteelement (25) durch das Zusammenwirken des Schraubengewindes (26) des Rückhalteelements und des Schraubengewindes (14c) des oder jedes zweiten Eingriffsabschnitts (14a) an dem oder jedem zweiten Eingriffsabschnitt befestigt ist.

## Revendications

1. Dispositif anti-siphon, comprenant :
un corps généralement tubulaire (1), comportant un axe longitudinal (X) ;
une sortie (18) ;
une entrée ; l'entrée comportant une ouverture adaptée pour recevoir une buse de distribution de carburant, dont l'extrémité a un diamètre extérieur D ; une obstruction (3) ; et un passage d'écoulement (17), **caractérisé en ce que** l'entrée comporte un étranglement (11a) espacé de ladite ouverture le long dudit axe et ayant un diamètre d inférieur à D ;
au moins une partie majeure de l'obstruction étant agencée entre l'étranglement (11a) et la sortie de l'obstruction (3), effilée vers l'extérieur par rapport à l'axe, dans une direction allant de l'étranglement (11a) vers la sortie (18) ; et
le passage d'écoulement (17) s'étendant de l'étranglement (11a) vers la sortie (18) et étant défini entre l'obstruction (3) et une surface de paroi (10b) entourant au moins pour l'essentiel l'obstruction (3), le passage d'écoulement (17) ayant une largeur minimale inférieure au diamètre d de l'étranglement (11a) ;
dans lequel au moins une partie de l'entrée est définie par une surface de paroi (10a) qui est effilée vers l'intérieur, dans la direction allant dudit axe vers ledit étranglement (11a) et est adaptée pour supporter l'extrémité de la buse de distribution de carburant (19).

2. Dispositif anti-siphon selon la revendication 1, comprenant en outre un élément de protection contre les éclaboussures généralement annulaire (2a), monté dans l'entrée et comportant une ouverture (2b) alignée axialement avec l'étranglement, et ayant un diamètre adapté pour recevoir la buse de distribution de carburant à diamètre D ;
et optionnellement :
dans lequel l'obstruction comprend un sommet situé sur ledit axe X, ladite ouverture s'étendant le long de l'axe X.

3. Dispositif anti-siphon selon la revendication 2, dans lequel l'élément de protection contre les éclaboussures (2a) comprend au moins un trou d'écoulement d'air.

4. Dispositif anti-siphon selon l'une quelconque des revendications précédentes, dans lequel la surface de paroi effilée est définie par au moins une partie d'une première surface de révolution d'une première ligne autour d'un premier axe de révolution ;
et optionnellement :
dans lequel le premier axe de révolution est l'axe (X).

5. Dispositif anti-siphon selon la revendication 4, dans lequel la ligne est une ligne droite ou une courbe, de sorte que ladite surface de paroi effilée a respectivement une forme en tronc de cône ou une forme bombée.

6. Dispositif anti-siphon selon l'une quelconque des revendications précédentes, dans lequel l'obstruction (3) comprend une surface dont au moins une partie est définie par au moins une partie d'une surface de révolution d'une deuxième ligne autour d'un deuxième axe de révolution ;
et optionnellement :
dans lequel le deuxième axe de révolution est l'axe (X) et/ou le premier axe de révolution.

7. Dispositif anti-siphon selon la revendication 6, dans lequel la deuxième ligne est une ligne droite ou une ligne courbée, de sorte qu'au moins une partie de ladite surface de l'obstruction a une forme conique, en tronc de cône ou bombée.

8. Dispositif anti-siphon selon l'une quelconque des revendications précédentes, dans lequel l'obstruction comprend un sommet ;
et optionnellement :
dans lequel ledit sommet se situe sur l'axe (X) et/ou le premier axe de révolution.

9. Dispositif anti-siphon selon l'une quelconque des revendications précédentes ;
dans lequel l'obstruction (3) comprend une surface, dont au moins une partie est parallèle à l'axe (X), la sortie (18) étant définie entre ladite surface de paroi et entourant au moins pour l'essentiel l'obstruction et ladite au moins une partie de la surface de l'obstruction ;
et/ou
dans lequel une partie d'une surface de l'obstruction définissant ledit au moins un passage d'écoulement est exempte d'ouvertures ;
et/ou
dans lequel la forme de section transversale de la sortie perpendiculaire à l'axe (X) est annulaire ou en partie annulaire ;
et/ou
dans lequel le profil parallèle à l'axe (X) d'au moins une partie de ladite surface de paroi entourant au moins pour l'essentiel l'obstruction correspond au profil parallèle à l'axe (X) d'au moins une partie de l'obstruction ;
et/ou
dans lequel le corps tubulaire comprend au moins un trou d'évent ; et optionnellement, dans lequel le au moins un trou d'évent est formé de sorte à s'ouvrir au niveau d'une première extrémité vers l'extérieur du corps tubulaire et au niveau d'une deuxième extrémité vers la surface de paroi effilée.

10. Dispositif anti-siphon selon l'une quelconque des revendications précédentes, dans lequel l'obstruction (3) comprend un élément d'obstruction, ladite surface de paroi entourant au moins pour l'essentiel l'obstruction étant définie par une partie de paroi, ledit élément d'obstruction et ledit élément de paroi étant distincts ;
et optionnellement :
dans lequel ladite partie de paroi et ledit corps tubulaire sont formés d'une seule pièce.

11. Dispositif anti-siphon selon la revendication 10, dans lequel l'élément d'obstruction comprend au moins une première partie d'engagement (14e), la partie de paroi comprenant au moins une deuxième partie d'engagement (14a), la ou chaque au moins une première partie d'engagement et la ou chaque au moins une deuxième partie d'engagement coopérant de sorte à monter l'obstruction dans le corps d'entrée tubulaire ;
et optionnellement :
dans lequel la ou chaque première partie d'engagement (14e) comprend une saillie radiale par rapport à l'axe (X), et optionnellement dans lequel la saillie radiale définit au moins une partie de la sortie.

12. Dispositif anti-siphon selon la revendication 11, dans lequel la ou chaque au moins une deuxième partie d'engagement (14a) comporte un filet de vis (14c) ;
et optionnellement :
dans lequel ledit filet de vis fait face à l'axe (X).

13. Dispositif anti-siphon selon la revendication 12, dépendant de la revendication 11, dans lequel la saillie radiale comprend un filet de vis (15), complémentaire du filet de vis (14c) de la ou de chaque deuxième partie d'engagement (14a).

14. Dispositif anti-siphon selon l'une quelconque des revendications 11 à 13, dans lequel la ou chaque deuxième partie d'engagement comprend un épaulement s'étendant radialement vers l'intérieur par rapport à l'axe (X).

15. Dispositif anti-siphon selon la revendication 14 dépendant des revendications 11 ou 12, comprenant en outre un élément de retenue (25) comportant un filet de vis (26) complémentaire de celui de la ou de chaque deuxième partie d'engagement (14a), dans lequel la saillie radiale est fixée entre l'épaulement (14d) et l'élément de retenue (25) et dans lequel l'élément de retenue (25) est fixé sur la ou chaque deuxième partie d'engagement par l'intermédiaire de la coopération entre le filet de vis (26) de l'élément de retenue et le filet de vis (14c) de la ou de chaque deuxième partie d'engagement (14a).
